# EUROPÄISCHE PATENTSCHRIFT

(11) **EP 0 920 113 B1**
(45) Veröffentlichungstag und Bekanntmachung des Hinweises auf die Patenterteilung: **14.02.2001**
(21) Anmeldenummer: 98811037.5
(22) Anmeldetag: 19.10.1998
(51) Int. Cl.: H02K 29/08, G01D 5/14

(54) **Gleichstrommotor**
Dc motor
Moteur à courant continu

(30) Priorität: 28.11.1997 CH 274997
(43) Veröffentlichungstag der Anmeldung: 02.06.1999
(73) Patentinhaber: SAIA-Burgess Electronics AG, CH-3280 Murten (CH)
(72) Erfinder: Balsiger, Werner, 3210 Kerzers (CH)
(74) Vertreter: AMMANN PATENTANWAELTE AG BERN

(56) Entgegenhaltungen:
- EP-A- 0 590 222
- DE-A- 3 519 901
- FR-A- 2 155 303
- FR-A- 2 304 206
- US-A- 5 640 090
- PATENT ABSTRACTS OF JAPAN vol. 013, no. 383 (E-811), 24. August 1989 & JP 01 133594 A (SECOH GIKEN INC), 25. Mai 1989
- PATENT ABSTRACTS OF JAPAN vol. 097, no. 010, 31. Oktober 1997 & JP 09 163706 A (SHARP CORP), 20. Juni 1997

## Beschreibung

Die vorliegende Erfindung bezieht sich auf einen Gleichstrommotor gemäss Oberbegriff des Anspruchs 1.

Bürstenlose Gleichstrommotoren weisen als Rotor im wesentlichen einen mehrpoligen Permanentmagneten auf. Der Rotor wird dadurch in Drehung versetzt, dass der Strom in den Statorspulen elektronisch kommutiert wird. Für diese Steuerung des Stromes in den Stator- oder Ständerwicklungen ist es nötig, die Stellung des Rotors möglichst genau zu bestimmen: je genauer die Stellung des Rotors bekannt ist, desto genauer kann das Gesamtfeld der Ständerwicklungen für einen gleichmässigen Lauf ausgerichtet werden bzw. die Position des Rotors geregelt werden, z. B. bei Anwendung als Stellantrieb.

Eine gängige Methode für die Messung der Stellung des Rotors besteht darin, Hallelemente, die in Abhängigkeit von einem Magnetfeld einen elektrischen Parameter, wie Hallspannung oder Widerstand, ändern, im Bereich des Rotors, und zwar üblicherweise nahe dessen Peripherie, anzuordnen. Der Bereich des Rotors, der an den Hallelementen vorbeiläuft, erhält, sofern er nicht schon die Magnetisierung für den Antrieb des Rotors aufweist, eine eigene Magnetisierung, die in Aufteilung und Lage exakt mit der Magnetisierung übereinstimmt, die dem Antrieb dient.

Nachteilig an der bekannten Ausführung ist, dass die Hallelemente sehr genau einjustiert werden müssen, um eine optimale Kommutierung des Ständerspulenstromes zu erreichen. Da die Hallelemente diskrete Bauteile sind, muss in der Regel jedes einzelne Hallelement für sich montiert und ausgerichtet werden. Insgesamt ergibt sich damit ein relativ komplizierter Aufbau, ein grosser Justierungsaufwand und eine hohe Positionierungsgenauigkeit.

FR-A-2 155 303 lehrt eine Anordnung zur Bestimmung der Drehstellung eines Rotors, der mit der eigentlich zu überwachenden Einrichtung auf geeignete Art, z. B. ein Getriebe, gekoppelt ist. Der Rotor besteht im wesentlichen aus einer mehrpoligen Magnetanordnung, so dass es möglich ist, eine Drehung der Achse durch einen Magnetsensor, der die Magnetanordnung abtastet, auch in Umdrehungsbruchteilen quantitativ zu erfassen. In einer Ausführung besteht die Magnetanordnung im wesentlichen aus zwei, in gewissem Abstand voneinander angeordneten ringförmigen Magneten mit einer Anzahl axialer Magnetisierungen. Die Anordnung der beiden Magnete erfolgt derart, dass sich im Spalt zwischen ihnen eine ringförmige Zone mit axialem Magnetfeld wechselnder Polarität und in der Spaltmitte nahezu parallelen Feldlinien ausbildet. Der in diesem Spalt angeordnete Mehrfachsensor reagiert auf Über- und Unterschreiten eines Schwellwerts an jedem Sensor und leitet davon die Stellung der Magnetanordnung ab. Durch die Konstruktion der Magnetordnung ergeben sich relativ hohe Feldstärken und scharfe Wechsel zwischen den verschiedenen Magnetisierungszonen. Die Anzahl Sensoren ist so gewählt, das die Reihe der Sensoren kürzer ist als eine vollständige Magnetisierungszone.

Diese Anordnung benötigt einen zusätzlichen, speziellen Messmagnet, und die Gesamtkonzeption setzt Magnetfeldsensoren als diskrete Bauelemente wegen der Baugrösse voraus. Eine Integration der Hallelemente auf einem Chip wird auch nicht erwähnt.

FR-A-2 304 206 lehrt eine radiale Anordnung von Sensoren, wobei jeder Sensor eine eigene, ringförmige Magnetspur auf einem Rotor abtastet. Durch Verschieben der Magnetisierungen der Zonen gegeneinander, z. B. um 120°, erzeugen die Sensoren ein entsprechend phasenverschobenes Signal. Eine Erhöhung der Auflösung über die Anzahl der Pole der Magnetisierung hinaus wird nicht betrachtet.

EP-A-0 590 222 beschreibt einen linearen Positionsdetektor, der eine Anzahl Hallelemente in einem Halbleiterchip integriert aufweist. Es werden jeweils die beiden benachbarten Hallelemente festgestellt, zwischen denen der Nulldurchgang der magnetischen Induktionen erfolgt, die z. B. von einem über dem Sensor beweglich angeordneten Magneten hervorgerufen wird. Die Auflösung dieses Detektors entspricht dem Abstand zwischen 2 Hallelementen. Bei einer Verwendung für die Ermittlung einer bogenförmigen Bewegung bleibt auch wenigstens das Problem der tangentialen Fehlanordnung ungelöst, und die erhöhten Anforderungen für die möglichst kontinuierliche, stufenfreie Bestimmung der Drehposition eines Rotors eines Gleichstrommotors zur Erzeugung eines möglichst kontinuierlichen Statorspulenstromes werden nicht erwähnt.

Eine Aufgabe der vorliegenden Erfindung besteht darin, einen bürstenlosen Elektromotor mit einem Drehstellungssensor anzugeben, der insgesamt die Motorherstellung preisgünstiger gestaltet.

Eine andere Aufgabe ist, die Abtastvorrichtung derart auszubilden, dass eine Drehstellungserfassung mit rechnerisch erhöhter Auflösung ermöglicht wird.

Ein solcher Elektromotor, der wenigstens eine der genannten Aufgaben löst, ist im Anspruch 1 angegeben. Die weiteren Ansprüche geben bevorzugte Ausführungsformen eines derartigen Elektromotors an.

Im erfindungsgemässen Gleichstrommotor ist die Magnetisierungszone, die zur Messung der Rotorpositionen dient, sehr nahe der Rotationsachse des Rotors angeordnet. Diese Messmagnetisierungszone ist weiterhin im wesentlichen ringförmig ausgebildet und ihre Magnetisierung bevorzugt parallel zur Rotationsachse ausgerichtet. Die Stellung des Rotors kann damit durch eine Anzahl bevorzugt im wesentlichen auf einem Kreisbogenstück angeordnete Hallelemente ertastet werden, die aufgrund der kleinen räumlichen Ausdehnung der Messmagnetisierungszone kostengünstig auf einem Halbleiterchip integriert sein können. Entsprechend heutzutage üblicher Chipgrössen ist die Bogenlänge, auf der die zur Messung verwendeten Hallelemente ausgebildet sind, kleiner als 5 mm und bevorzugt maximal 3 mm. Grössere Bogenlängen sind jedoch nicht gänzlich ausgeschlossen, aber bei Integration auf einem einzigen Chip stark zunehmend kostenungünstiger.

Um trotz der geringen Abmessungen und der starken Krümmung der Messanordnung aufwendige Justierungen, insbesondere in tangentialer Richtung, zu vermeiden, ist grundsätzlich eine grössere Zahl an Hallelementen vorhanden als für die Messung benötigt wird. Die tangentiale Verschiebung kann durch Auswahl einer Gruppe von Hallelementen aus der zur Verfügung stehenden Anzahl realisiert werden. Bei Integration auf einem Chip ist auch das Vorsehen überzähliger Hallelemente kostengünstig möglich.

Bevorzugt kann die Bogenlinie, auf der die Hallelemente auf dem Chip angeordnet sind, eine geringere Krümmung aufweisen als die angestrebte Messlinie in der Messmagnetisierungszone. In bezug auf die nahe der Achse sehr schmal werdenden Messmagnetisierungspole ist auch anzumerken, dass dabei auch die zur Verfügung stehende magnetische Feldstärke stark abnimmt, insbesondere auch in dem Abstand im Millimeterbereich der Hallelemente bzw. des Chips von der Messmagnetisierungsoberfläche. Auch hierdurch wird die Anforderung an die genaue Positionierung erhöht, die durch die Überzahl an Messelementen überraschend effektiv einzuhalten möglich ist.

Die Erfindung soll weiter an einem Ausführungsbeispiel unter Bezugnahme auf Figuren erläutert werden.
- Figur 1: zeigt einen Schnitt durch eine Prinzipdarstellung eines Gleichstrommotors;
- Figur 2: zeigt einen Schnitt gemäss Schnittlinie II-II in Figur 1; und
- Figuren 3 bis 5: zeigen Schnitte analog Figur 1 durch andere Ausführungsformen von Gleichstrommotoren.

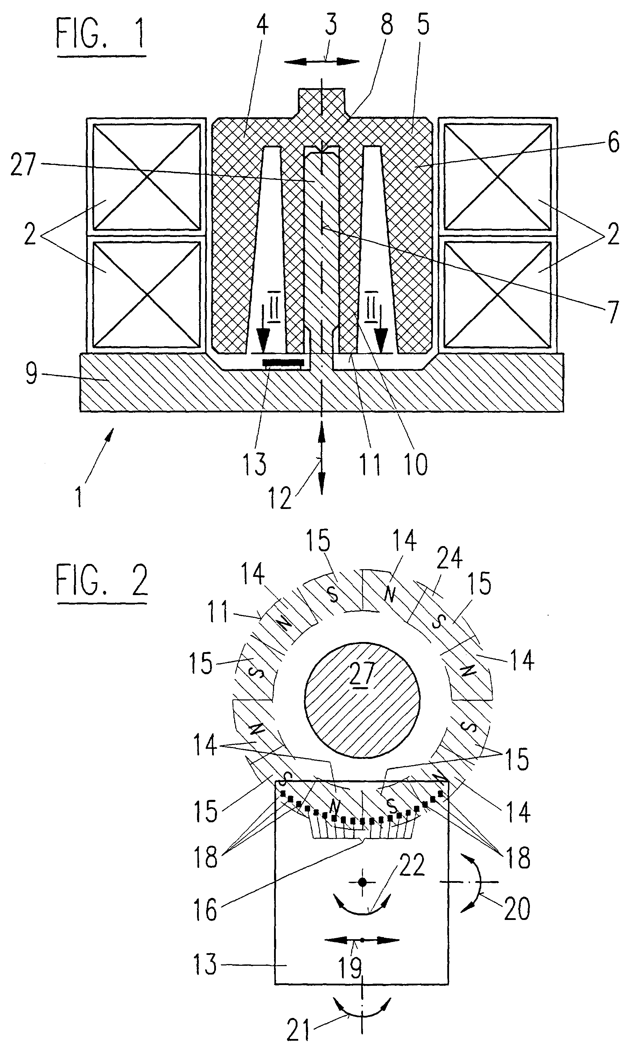

Figur 1 zeigt einen Gleichstrommotor 1 in einer Prinzipdarstellung mit einer Ständerspule 2, die ein Magnetfeld in Richtung des Pfeiles 3 erzeugen kann. Eine weitere Ständerspule erzeugt z. B. ein Magnetfeld senkrecht zur Zeichnungsebene, so dass durch Kommutieren des Spulenstrom ein Drehfeld erzeugbar ist, dessen Richtung im wesentlichen durch Drehung des Pfeils 3 um die Drehachse 7 des Motors gegeben ist. Es handelt sich insoweit um einen üblichen bürstenlosen Gleichstrommotor.

Der Rotor 4 besteht im wesentlichen aus magnetisierbarem Ferritmaterial mit polymerem Binderzusatz und ist durch Spritzen hergestellt. Er weist einen äusseren, im wesentlichen zylindrischen Mantel 6 auf, der senkrecht zur Drehachse 7 des Motors, unter Bildung von sechs Magnetpolpaaren magnetisiert ist. Er ist damit identisch mit der Antriebsmagnetisierungszone 5. Der Rotor 4 ist auf der stationären Achse 27 drehbar gehalten. Dazu ist am Rotor 4 eine Lagerspitze 8 ausgebildet, so dass bei Drehen um die Achse 27 nur eine geringe Reibung auftritt. Die Achse 27 ist fest mit dem Stator 9 des Motors verbunden.

Zur weiteren Führung weist der Rotor 4 eine Führungshülse 10 auf, die die Achse 27 umgibt. Das untere Ende 11 der Hülse 10 ist mit der Messmagnetisierung parallel zur Drehachse 7 (Pfeil 12, Fig. 2) versehen. Diese Messmagnetisierungszone besteht, wie die Antriebsmagnetisierungszone, aus sechs Magnetpolpaaren, die genau fluchtend mit den Polen der Antriebsmagnetisierungszone 5 ausgerichtet sind.

Nahe dem unteren Ende 11 der Hülse 10 ist der Sensor 13 angeordnet, so dass die von der Messmagnetisierungszone ausgehenden Magnetfelder in den magnetfeldempfindlichen Teilen des Sensors 13 ein Signal erzeugen können.

Figur 2 zeigt die Anordnung des Sensors 13 in starker Vergrösserung. Das ringförmige Ende 11 der Führungshülse 10 ist zur Messmagnetisierungszone 24 magnetisiert, die in sechs Magnetpolpaare (Nordpole 14, Südpole 15) aufgeteilt ist, deren Magnetisierungsrichtung senkrecht zur Bildebene steht. Der Sensor 13 enthält eine Anzahl Hallelemente 16 in einer bogenförmigen Anordnung in Anpassung an die Form des Endes 11 im Bereich zweier benachbarter Pole 14, 15. An beiden Enden der Hallelementeanordnung 16 schliessen sich noch weitere, überzählige Hallelemente 18 an, deren Bedeutung weiter unten noch erläutert wird. Die Hallelemente 16, 18 befinden sich integriert auf einem Halbleiterchip bevorzugt zusammen mit zumindest Teilen der Ansteuer- und Auswertungselektronik. Diese Elektronik kann unter Beachtung der besonderen Anforderungen der Erfindung, die weiter unten noch erläutert werden, nach bekannten Prinzipien aufgebaut werden, so dass sich eine weiterführende, detaillierte Erläuterung derselben erübrigt.

Im wesentlichen wird für die Bestimmung der Stellung des Rotors 4 die Grenze zwischen einem Nord- und Südpol 14 bzw. 15 herangezogen, wo das von den Hallelementen 16 gelieferte Signal einen Nulldurchgang oder ein relativ scharfes Extremum aufweist. Für die exakte Bestimmung dieser Grenze wird eine derartige Anzahl Hallelemente 16 eingesetzt, dass die Länge des von ihnen abgedeckten Bogens eine volle Polarisierungsperiode der Messmagnetisierungszone 24 abdeckt. Etwaige Toleranzen werden durch die überzähligen Hallelemente 18 aufgefangen. In einem Eichvorgang nach Zusammenbau des Motors wird bestimmt, wieviele und welche der Hallelemente 16, 18 benötigt werden, um eine derartige volle Magnetisierungsperiode abzudecken. Nur die Signale von den so festgelegten Hallelementen 16 werden für den Betrieb des Motors 1 ausgewertet.

Aus der bevorzugten Erfassung einer vollständigen Magnetisierungsperiode und den heute gängigen Chipmassen bis ca. 5 mm Kantenlänge ergibt sich eine im wesentlichen gleich grosse maximale Bogenlänge, die durch die Hallgeneratoren 16, 18 abgedeckt werden kann, und daraus die Vorgabe, dass der Durchmesser der Messmagnetisierungszone 24, hier identisch mit dem unteren Ende 11, einen entsprechend geringen Radius aufweist. Bevorzugt beträgt die von den Hallelementen 16, 18 erfasste Bogenlänge jedoch eine kleinere Strecke, z. B. um 3 mm oder kleiner.

Der Sensor 13 kann die durch die Pfeile 19 (tangential verschoben), 20 (gekippt um x-Achse oder tangential verdreht) und 21 (gekippt um y-Achse oder radial verdreht) angegebenen Anordnungsfehler gegenüber der Messmagnetisierung aufweisen. Eine Verdrehung gemäss Pfeil 22 um die z-Achse senkrecht zur Bildebene entspricht einer tangentialen Verschiebung gemäss Pfeil 19 und kann daher wie diese behandelt werden.

Eine radiale Verdrehung (Pfeil 21) bewirkt eine Änderung in der Frequenz bzw. der Anzahl Hallelemente 16, die zur Erfassung einer ganzen Magnetisierungsperiode nötig sind. Die Kompensation kann durch Einsatz zusätzlicher Hallelemente aus den überschüssigen Hallelementen 18 erfolgen. Eine tangentiale Verdrehung gemäss Pfeil 20 bewirkt einzig eine Amplitudenänderung. Dieser Fehler ist jedoch zum einen dadurch entschärft, dass der relativ scharf zu bestimmende Übergang zwischen Nord- und Südpol bestimmt wird, und kann andererseits durch eine Korrektur in der Bewertung der Amplitude des Signals, das von jedem der Hallgeneratoren 16 geliefert wird, erfolgen. Diese Korrektur kann in einem Eichvorgang nach Zusammenbau des Motors bestimmt werden und nichtflüchtig in der Auswertungselektronik festgehalten werden. Eine tangentiale Verschiebung gemäss Pfeil 19 führt dagegen zu einem Phasenfehler, d. h., die Position des Rotors 4 wird um einen der tangentialen Verschiebung entsprechenden Drehwinkel falsch bestimmt. Auch die Kompensation dieser Fehlergrösse Kann durch Wahl der Hallelemente 16 innerhalb der insgesamt zur Verfügung stehenden Hallelemente 16, 18 erfolgen, also durch eine der Verschiebung 19 gegenläufige Festlegung der Messzone aus Hallelementen 16.

Eine weitere, unvermeidbare Fehlerquelle ist die beträchtliche relative und absolute Streuung der Parameter der Hallelemente 16, 18. Auch hierfür kann, wie oben bereits bei anderen Fehlerquellen angegeben, durch Bestimmung von Korrekturwerten in einem Justiervorgang bei zusammengebautem Motor eine Kompensation dieser Effekte erzielt werden. Der übliche Parameter für eine optimale Justierung ist das Erreichen einer maximalen Leerlaufdrehzahl des Motors. Mathematische Verfahren und Algorithmen zur Bestimmung eines derartigen Optimums in Abhängigkeit einer Vielzahl, z. T. voneinander abhängigen Parametern sind an sich bekannt.

Der im Ausführungsbeispiel dargestellte Rotor 4 ist im Gegensatz zu den üblichen Rotoren in einem Stück aus Ferritmaterial mit Kunststoffbinder gespritzt. Herkömmliche Rotoren weisen statt dessen eine Stahlachse auf, um die herum der Antriebsteil aus Ferritmaterial gespritzt wird. Da jedoch das Ferritmaterial nur schlechte Laufeigenschaften und Standfestigkeit aufweist und daher einem relativ hohen Verschleiss an den Lauf- und Lagerflächen unterliegt, werden diese auch im Hinblick auf leichten Lauf des Rotors bevorzugt mit Stahlelementen geschützt.

Zum Sensor 13 ist noch zu bemerken, dass er im Extremfall die gesamte Steuerelektronik des Motors enthalten kann, also auch z. B. die Hochstromtreiber für die Spulen 2, wodurch sich eine bisher unerreichte Vereinfachung und Kompaktheit des Gleichstrommotors ergeben.

Im Extremfall benötigte der Motor dann nur noch Stromversorgungsanschlüsse und Eingänge für die Vorgabe einer Position und/oder einer Drehzahl.

Abwandlungen des dargestellten Ausführungsbeispiels sind dem Fachmann aus der Beschreibung eingängig, ohne den Bereich der Erfindung zu verlassen. Im folgenden sind einige solche denkbare Abwandlungen dargestellt:

Es können andere Anzahlen von Polpaaren eingesetzt werden.

Eine nichtfluchtende Anordnung der Magnetisierungsgrenzen von Antriebsmagnetisierungszone und Messmagnetisierungszone ist auch denkbar, da unabhängig davon die Stellung des Rotors bestimmt werden kann. Allerdings ist dann ein erhöhter Aufwand für eine Phasenverschiebung in der Kommutierung des Spulenstromes nötig im Vergleich mit einer im Prinzip fluchtenden Anordnung der Magnetisierungsgrenzen.

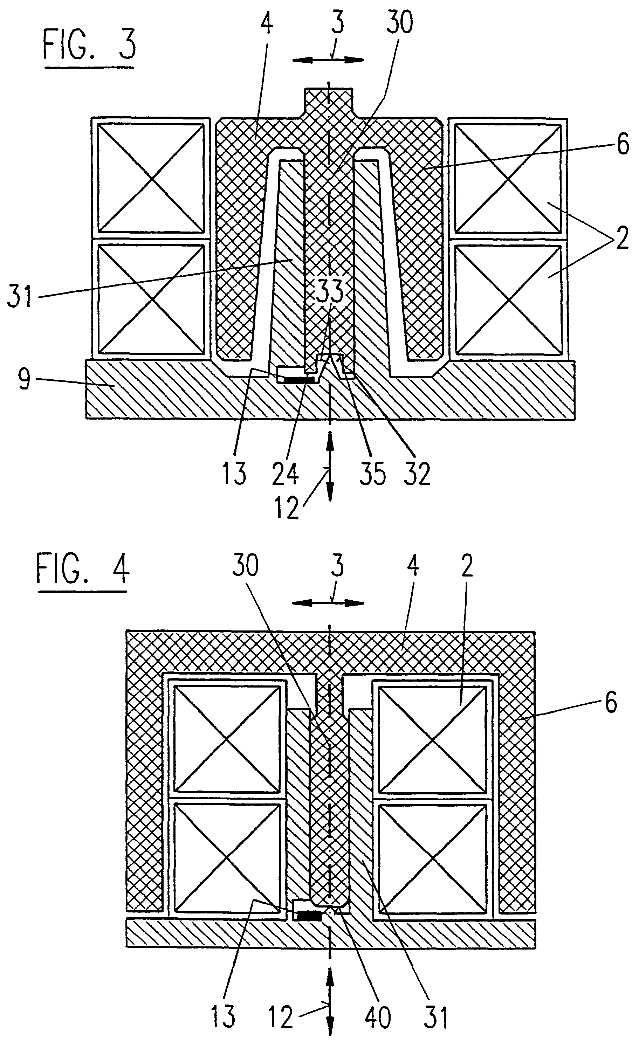

Andere denkbare Rotorformen zeigen die Figuren 3 bis 5, in denen mit Figur 1 und 2 übereinstimmende Teile mit gleichen Bezugszeichen bezeichnet sind: Der Rotor 4 der Figur 3 weist eine Achse 30 auf, die in einer zylindrischen Führung 31 des Stators geführt ist und auf einer Spitze 33 aufsitzt. Um die Aufnahme 34 herum weist die Achse 30 einen Kragen 32 auf, dessen ringförmige Frontfläche die Messmagnetisierungszone 24 aufweist und in Richtung des Pfeils 12 magnetisiert ist. Der Sensor 13 befindet sich in einer Ausnehmung 34 der Führungshülse 31.

Der Rotor 40, ein Aussenläufer, der Figur 4 ist ähnlich dem Rotor der Figur 3 mit einer zentralen Achse ausgestattet, umgibt jedoch mit seinem Antriebsteil 6 die Spulen 2. Auf einen Kragen 32 für die Messmagnetisierung wird verzichtet, anstatt dessen wird das untere Ende 40 der Welle 30 mit der Messmagnetisierungszone versehen. Auch hier befindet sich der Sensor 13 wieder in einer Ausnehmung der Führungshülse 31.

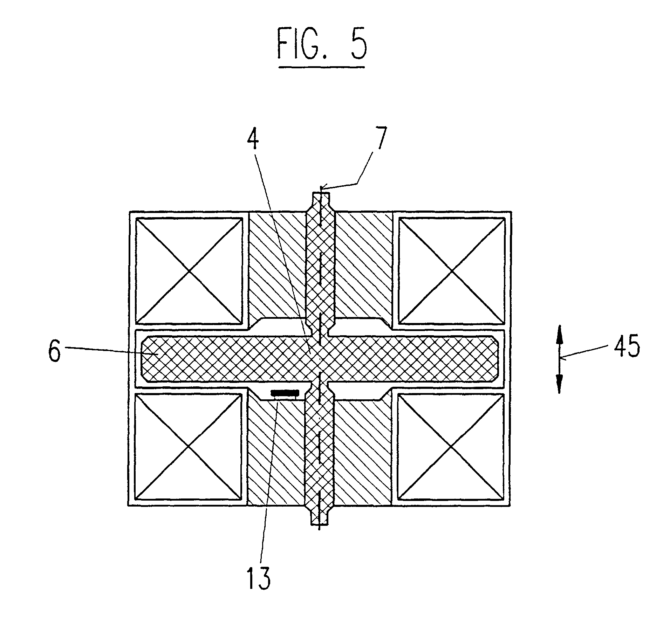

Figur 5 zeigt schliesslich einen Rotor 4 mit scheibenförmigem Antriebsteil 6. Die Antriebsmagnetisierung des Antriebsteils 6 ist hier in Richtung des Pfeils 45 ausgerichtet, also parallel zur Achse 4. Die Magnetisierung erstreckt sich dabei bis nahe an die Achse 4 heran, so dass deren Magnetfeld auch von dem nahe der Achse 4 angeordneten Sensor 13 erfasst wird. Bei dieser Ausführung entfällt also die Notwendigkeit, zwei separate Magnetisierungen für Antriebsmagnetisierungszone und Messmagnetisierungszone vorzunehmen.

Der Motor kann auch andere Anzahlen von Spulen aufweisen, wobei zwei Spulen zugleich eine gängige wie auch die unterste, in der Praxis derzeit verwendete Anordnung darstellt. Andere gängige Spulenzahlen sind 1, 2, 3, 5, 7. Die Möglichkeit, auch nur eine Spule vorzusehen, ist also nicht ausgeschlossen. Der Rotor könnte auch aus anderem, permanent magnetisierbarem Material bestehen, zumindest an den Teilen, die eine Magnetisierung aufweisen müssen.

Die Achse des Rotors könnte auch aus Stahl bestehen und mit Kunststoff umspritzt sein. Die Achse könnte auch mit einem oder beiden Enden das Motorgehäuse durchstossen wie Fig. 5 darstellt.

Es kann auch eine andere Anzahl von Hallelementen vorhanden sein. Mit der Anzahl Hallelemente steigt zwar der Aufwand der Auswertung, aber mit der höheren Auflösung der Stellung kann auch eine zunehmend kontinuierliche Kommutierung des Spulenstroms vorgenommen werden. Die minimale Diskretisierung der Stellung des Rotors ist in an sich bekannter Weise durch die Anzahl Spulen des Ständers gegeben. Hallgeneratorzahlen sind z. B. 5(4), 10(8), 20(16), wobei jeweils in Klammern die Anzahl nebeneinanderliegender Hallelemente angegeben ist, die aus der Gesamtzahl für die Messung ausgewählt werden. Für die heutigen nummerischen Verfahren sind 2er-Potenzen besonders geeignet, bei anderen Auswertungsverfahren sind jedoch auch andere Zahlen möglich. Die Anzahl überschüssiger Hallsensoren ist durch die vorgebene Toleranz gegen Justierungsfehler nach unten begrenzt. Eine obere Grenze ist mehr durch eine Begrenzung des Aufwands der Herstellung und der Grösse der verfügbaren Chipfläche gegeben.

Eine andere Definition der Überzahl kann auch in Prozent gegeben werden, insbesondere bei grösserer Anzahl Hallgeneratoren. Die Überzahl sollte nicht kleiner als 10% der Zahl Hallgeneratoren angesetzt werden, die für die Gruppe der zur Messung nötigen Hallgeneratoren vorgesehen ist. Ein bevorzugter Bereich sind 20% bis 50%, insbesondere bis 25 %.

Es könnte schliesslich auch eine Anordnung von Hallgeneratoren 16 vorgesehen sein, die mehr als eine Magnetisierungsperiode abdeckt, z. B. bei höherer Polzahl ein ganzzahliges Mehrfaches einer Magnetisierungsperiode.

Für die Ermittlung der Rotorposition sind u. a. die beiden folgenden alternativen Verfahren denkbar:
1. Das Signal der Hallelemente wird mit einer vorgegebenen Vergleichsfunktion, z. B. einem Sinus, korreliert, wobei die Phase der Vergleichs funktion für maximale Korrelation optimiert wird. Aus dieser Phasenlage und der Vergleichsfunktion selbst ist die Position des Rotors bestimmbar.
2. Das Signal der Hallelemente wird einem Analyseverfahren unterworfen, z. B. einer Fouriertransformation, und aus den so erhaltenen Anteilen idealer Funktionen kann die Rotorposition ermittelt werden. Im Fall der Fouriertransformation werden Koeffizienten für Sinus- und Kosinusfunktionen berechnet und in der Regel die 1. Harmonische für die Bestimmung der Stellung des Rotors herangezogen.

Vorzugsweise wird bei diesen Verfahren ausgenutzt, dass die aktiven Hallgeneratoren genau eine Messmagnetisierungsperiode oder ein ganzzahliges Vielfaches davon erfassen: es kann dann als zusätzliche Korrelationsbedingung verwendet werden, dass die Summe des Signals über alle Hallelemente, ggf. nach Festlegen einer Korrekturfunktion bei der Herstellung des Motors, Null ergeben muss.

## Patentansprüche

1. Bürstenloser Elektromotor (1) mit einem Rotor (4), der eine permanent magnetisierte Antriebsmagnetisierungszone (5;45) mit mindestens einem magnetischen Polpaar aufweist, und einer stationären Spulenanordnung mit mindestens einer Ständerspule (2), wobei durch die Magnetfelder der Ständerspulen (2) der Rotor (4) in Drehbewegung versetzbar ist,
**gekennzeichnet durch** eine permanent magnetisierte Messmagnetisierungszone (24) am Rotor und einen im Bereich des Magnetfelds der Messmagnetisierungszone angeordneten Sensor (13), wobei der Sensor eine Anordnung von mindestens fünf integriert auf einem Halbleiterchip ausgeführten, magnetfeldempfindlichen Elementen (16, 18) aufweist, die im wesentlichen in einer geraden oder gekrümmten Reihe angeordnet sind und mehr als eine Periode der Messmagnetisierung abdecken, so dass die Stellung des Rotors (4) aus dem Ausgangssignal der magnetfeldempfindlichen Elemente (16, 18), das durch die Einwirkung des Magnetfelds der Messmagnetisierungszone hervorgerufen wird, durch numerische Korrelation der Messignale mit einer vorgegebenen, einer oder mehreren Periode(n) entsprechenden Vergleichskurve mit hoher Präzision bestimmbar ist.

2. Elektromotor (1) gemäss Anspruch 1, dadurch gekennzeichnet, dass die Anzahl magnetfeldempfindlicher Elemente (16, 18) eine geradzahlige Zweierpotenz, insbesondere 4, 8, 16 oder 32 jeweils zuzüglich mindestens 1, bevorzugt 1 bis 4, und/oder bis zu 25% der Zweierpotenz ist.

3. Elektromotor (1) gemäss einem der Ansprüche 1 oder 2, dadurch gekennzeichnet, dass der Abstand zwischen erstem und letztem Element der Reihe magnetempfindlicher Elemente höchstens etwa 5 mm, bevorzugt höchstens 4 mm und besonders bevorzugt höchstens 3 mm beträgt.

4. Elektromotor (1) gemäss einem der Ansprüche 1 bis 3, dadurch gekennzeichnet, dass die Messmagnetisierungszone (24) im wesentlichen ringförmig die Drehachse (7) des Rotors (4) umgibt, im wesentlichen parallel zur Drehachse (7) magnetisiert und die Anordnung magnetfeldempfindlicher Elemente als bogenförmige Reihe in Anpassung an den Verlauf der Messmagnetisierungszone ausgebildet ist.

5. Elektromotor (1) gemäss einem der Ansprüche 1 bis 4, dadurch gekennzeichnet, dass der Rotor (4) im wesentlichen aus einem Stück und vollständig aus magnetisierbarem Ferritmaterial besteht.

6. Elektromotor (1) gemäss Anspruch 5, dadurch gekennzeichnet, dass Lagerstellen des Rotors (4) mit verschleissfesten Teilen, insbesondere aus Stahl, verstärkt sind.

7. Elektromotor (1) gemäss einem der Ansprüche 1 bis 6, dadurch gekennzeichnet, dass die Messmagnetisierungszone (24) durch einen ringförmig die Drehachse (7) des Rotors (4) umgebenden Teil desselben gebildet wird, insbesondere mit einem Radius von höchsten 5 mm und besonders bevorzugt von höchstens 3 mm.

8. Elektromotor (1) gemäss einem der Ansprüche 1 bis 7, dadurch gekennzeichnet, dass die Messmagnetisierung die gleiche Anzahl Nord- und Südpole (14, 15) in fluchtender Anordnung wie die bzw. mit der Antriebsmagnetisierungszone (5) für möglichst genauen Gleichlauf der beiden Magnetisierungszonen (5, 24) gegenüber Ständerspulen (2) bzw. Sensor (13) aufweist.

9. Elektromotor gemäss einem der Ansprüche 1 bis 8, dadurch gekennzeichnet, dass sämtliche, der Messung der Stellung des Rotors (4) dienenden, magnetfeldempfindlichen Elemente (16, 18) auf dem Halbleiterchip angeordnet sind, bevorzugt als darauf integrierte Bauelemente.

10. Elektromotor gemäss einem der Ansprüche 1 bis 9, dadurch gekennzeichnet, dass sich im wesentlichen der ganze Motordrehzahl- und/oder Rotorpositionierungsregelkreis auf dem Halbleiterchip befinde, bevorzugt auch die Hochstromkomponenten für die Steuerung des Ständerspulenstroms, so dass der Motor nur Stromversorgungsanschlüsse und Eingänge für die Vorgabe einer Rotorposition und/oder einer Drehzahl aufweist.

## Claims

1. Brushless electromotor (1), comprising a rotor (4) having a permanently magnetised propulsion magnetisation zone (5; 45) with at least one pair of magnetic poles, and a stationary coil assembly with at least one stator coil (2), the rotor (4) being rotationally movable by the magnetic fields of the stator coils (2),
characterised by a permanently magnetised measuring magnetisation zone (24) on the rotor and a sensor (13) which is disposed in the range of the magnetic field of the measuring magnetisation zone, the sensor comprising an arrangement of at least five elements (16, 18) responding to the magnetic field which are integrated on a semiconductor chip in a straight or curved row essentially and cover more than one period of the measuring magnetisation, so that the position of the rotor (4) can be determined with high precision from the output signal of the elements (16, 18) responding to the magnetic field, which is generated by the action of the magnetic field of the measuring magnetisation zone, by numeric correlation of the measuring signals with a predetermined reference curve corresponding to one or several period(s).

2. Electromotor (1) according to claim 1, characterised in that the number of elements (16, 18) responding to the magnetic field is an even power of two, more particularly 4, 8, 16 or 32, plus at least 1, preferably 1 to 4, and/or up to 25% of the respective power of two.

3. Electromotor (1) according to one of claims 1 or 2, characterised in that the distance between the first and the last element of the series of magnetically sensitive elements is no more than approx. 5 mm, preferably no more than 4 mm, and more preferably no more than 3 mm.

4. Electromotor (1) according to one of claims 1 to 3, characterised in that the measuring magnetisation zone (24) surrounds the rotational axis (7) of the rotor (4) in an essentially annular shape, is magnetised essentially in parallel to the rotational axis (7), and in that the arrangement of field-sensitive elements is in the form of an arcuate row adapted to the configuration of the measuring magnetisation zone.

5. Electromotor (1) according to one of claims 1 to 4, characterised in that the rotor (4) is in one piece and completely made of a magnetisable ferrite material essentially.

6. Electromotor (1) according to claim 5, characterised in that bearing elements of the rotor (4) are reinforced with wear-resistant parts, particularly of steel.

7. Electromotor (1) according to one of claims 1 to 6, characterised in that the measuring magnetisation zone (24) is formed by an annular portion which surrounds the rotational axis (7) of the rotor (4), more particularly having a radius of 5 mm at the most, and preferably of 3 mm at the most.

8. Electromotor (1) according to one of claims 1 to 7, characterised in that the measuring magnetisation comprises the same number of north and south poles (14, 15) as the propulsion magnetisation zone (5) which are aligned to the latter for maximum synchronism of the two magnetisation zones (5, 24) with respect to the stator coils (2) resp. the sensor (13).

9. Electromotor according to one of claims 1 to 8, characterised in that all of the elements (16, 18) responding to the magnetic field and serving for the measurement of the position of the rotor (4) are disposed on the semiconductor chip, preferably in the form of components which are integrated thereon.

10. Electromotor according to one of claims 1 to 9, characterised in that the entire motor speed and/or rotor positioning control circuit is provided on the semiconductor chip essentially, preferably also the high-current components for the control of the stator coil current, so that the motor merely comprises power supply terminals and inputs allowing to set a rotor position and/or a rotational speed.

## Revendications

1. Electromoteur (1) sans balais comprenant un rotor (4) muni d'une zone de magnétisation motrice permanente (5; 45) avec au moins une paire de pôles magnétiques, ainsi qu'un ensemble stationnaire de bobines avec au moins une bobine de stator (2), le rotor (4) pouvant être mis en rotation par les champs magnétiques des bobines de stator (2), caractérisé par une zone de magnétisation de mesure (24) permanente sur le rotor et un détecteur (13) disposé dans le domaine du champ magnétique de ladite zone de magnétisation de mesure, ledit détecteur présentant une disposition de cinq éléments (16, 18) sensibles au champ magnétique au moins qui sont intégrés sur une puce semi-conductrice et disposés dans une rangée droite ou courbée, et qui couvrent plus qu'une période de la magnétisation de mesure, de sorte que la position du rotor (4) peut être déterminée très précisément à partir du signal de sortie desdits éléments (16, 18) sensibles au champ magnétique, produit par l'effet du champ magnétique de la zone de magnétisation de mesure, par corrélation numérique des signaux de mesure avec une courbe de comparaison définie correspondant à une ou plusieurs période(s).

2. Electromoteur (1) selon la revendication 1, caractérisé en ce que le nombre d'éléments (16, 18) sensibles au champ magnétique est égal à une puissance paire de deux, plus particulièrement à 4, 8, 16 ou 32, plus 1, préférablement 1 à 4, et/ou jusqu'à 25% de la puissance de deux.

3. Electromoteur (1) selon l'une des revendications 1 ou 2, caractérisé en ce que l'écart entre le premier et le dernier élément de la rangée d'éléments sensibles au champ magnétique est égal à environ 5 mm au plus, préférablement à 4 mm au plus, et plus préférablement à 3 mm au plus.

4. Electromoteur (1) selon l'une des revendications 1 à 3, caractérisé en ce que la zone de magnétisation de mesure (24) entoure l'axe de rotation (7) du rotor (4) en forme annulaire essentiellement, qu'elle est magnétisée essentiellement parallèlement à l'axe de rotation (7), et que la disposition d'éléments sensibles au champ magnétique est réalisée sous forme d'une rangée arquée adaptée à la configuration de la zone de magnétisation de mesure.

5. Electromoteur (1) selon l'une des revendications 1 à 4, caractérisé en ce que le rotor (4) est essentiellement formé d'une pièce et consiste entièrement en une matière ferritique magnétisable.

6. Electromoteur (1) selon la revendication 5, caractérisé en ce que les éléments de roulement du rotor (4) sont renforcés par des pièces résistantes à l'usure, plus particulièrement en acier.

7. Electromoteur (1) selon l'une des revendications 1 à 6, caractérisé en ce que la zone de magnétisation de mesure (24) est constituée par une partie du rotor (4) qui entoure l'axe de rotation (7) de ce dernier en forme annulaire, plus particulièrement d'un rayon de 5 mm au plus, et plus préférablement de 3 mm au plus.

8. Electromoteur (1) selon l'une des revendications 1 à 7, caractérisé en ce que la magnétisation de mesure présente le même nombre de pôles nord et de pôles sud (14, 15) que la zone de magnétisation motrice (5) en alignement sur cette dernière en vue d'un synchronisme aussi exact que possible des deux zones de magnétisation (5, 24) par rapport aux bobines de stator (2) resp. au détecteur (13).

9. Electromoteur (1) selon l'une des revendications 1 à 8, caractérisé en ce que tous les éléments (16, 18) sensibles au champ magnétique servant à la mesure de la position du rotor (4) sont disposés sur une puce semi-conductrice, préférablement sous forme de composants intégrés sur ce dernier.

10. Electromoteur (1) selon l'une des revendications 1 à 9, caractérisé en ce que la puce semi-conductrice comporte le circuit de commande entier de la vitesse du moteur et/ou de positionnement du rotor, préférablement également les composants à courant fort pour la commande du courant des bobines de stator, de manière que le moteur présente uniquement des raccordements d'alimentation et des entrées pour la commande d'une position du rotor et/ou d'une vitesse.
